# EUROPÄISCHE PATENTSCHRIFT

(11) **EP 1 916 151 B1**
(45) Veröffentlichungstag und Bekanntmachung des Hinweises auf die Patenterteilung: **07.03.2012**
(21) Anmeldenummer: 07019682.9
(22) Anmeldetag: 09.10.2007
(51) Int. Cl.: B60Q 1/00, B62J 6/00, B62J 17/04

(54) **Motorrad mit einer Anzeigeeinrichtung**
Motor cycle with a display device
Moto dotée d'un dispositif d'affichage

(30) Priorität: 27.10.2006 DE 102006050764
(43) Veröffentlichungstag der Anmeldung: 30.04.2008
(73) Patentinhaber: Bayerische Motoren Werke Aktiengesellschaft, 80809 München (DE)
(72) Erfinder: Strasser, Ralf, 82140 Olching (DE)

(56) Entgegenhaltungen:
- DE-A1- 4 427 606
- DE-U1- 20 204 058
- US-A- 5 590 947

## Beschreibung

Die vorliegende Erfindung betrifft ein Motorrad gemäß dem Oberbegriff des Patentanspruches 1.

Zum technischen Hintergrund der Erfindung zählen die DE 44 27 606 A1, US 5 590 947 sowie die DE 202 04 058 U1 im Einklang mit der Oberbegriff.

Motorräder, insbesondere im "Supersportsegment" sind häufig mit einer so genannten "Schaltblitzeinrichtung" ausgestattet. Überschreitet die Drehzahl des Motorradmotors einen vorgegebenen kritischen Wert, so erzeugt eine im Kombiinstrument angeordnete Warnleuchte ein optisches Warnsignal, das den Fahrer auffordern soll, entweder in einen höheren Gang zu schalten oder die Gaszufuhr zu drosseln.

Bei Fahrten im Hochdrehzahlbereich ist der Fahrer üblicherweise hochkonzentriert. Da seine ganze Aufmerksamkeit auf den vor ihm liegenden Streckenabschnitt gerichtet ist, kann es vorkommen, dass die "Schaltblitzleuchte" nicht oder nicht rechtzeitig wahrgenommen wird, mit der Gefahr, dass dadurch der Motor geschädigt wird.

Aufgabe der Erfindung ist es, ein Motorrad mit einer Anzeigeeinrichtung, insbesondere mit einer Schaltblitzeinrichtung zu schaffen, die noch zentraler im Sichtbereich des Fahrers angeordnet ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Motorrad mit einer Elektronik, welche mindestens einen Zustandsparameter, wie z.B. die Drehzahl eines Motors des Motorrads, überwacht. Bei Vorliegen eines vorgegebenen Zustandsparameters oder bei Erreichen eines vorgegebenen Zustandsparameterbereichs, wie z.B. Erreichen eines kritischen Motordrehzahlbereichs, erzeugt die Elektronik ein Signal bzw. Warnsignal, das eine Anzeige- bzw. Warneinrichtung ansteuert. Im Falle einer Motordrehzahlüberwachung soll die Warneinrichtung dazu auffordern, die Drehzahl des Motors zu reduzieren. Das Signal kann auch schlicht dazu vorgesehen sein, den Fahrer aufzufordern, seinen Blick nach unten auf das Kombiinstrument zu richten, wenn dort ein Anzeigeelement einen kritischen Zustand anzeigt.

Der Kern der Erfindung besteht darin, dass zumindest ein Teil der Anzeige- bzw. Warneinrichtung in ein Windschild des Motorrads integriert oder durch das Windschild als solches gebildet ist. Im Vergleich zu herkömmlichen Anzeige- bzw. Warn einrichtungen, wie z.B. herkömmlichen Schaltblitzeinrichtungen, ist die erfindungsgemäße Anzeige- bzw. Warneinrichtung "höher" und somit zentraler im Sichtfeld des Fahrers angeordnet, was die Gefahr, dass der Fahrer ein Warnsignal übersieht, deutlich verringert.

Nach einer Weiterbildung der Erfindung ein Teil der Anzeige- bzw. Warneinrichtung durch einen Lichtleiter gebildet. Bei dem Signal bzw. Warnsignal kann es sich dann um ein in den Lichtleiter eingekoppeltes Lichtsignal handeln.

Vorzugsweise ist das Windschild aus einem transparenten bzw. lichtleitenden Material hergestellt und fungiert selbst als Lichtleiter und somit als Teil der Warneinrichtung.

Die Warneinrichtung weist ferner mindestens eine von der Elektronik angesteuerte Lichtquelle auf, die Licht in den Lichtleiter einkoppelt. Das eingekoppelte Licht kann ein- oder mehrfarbig sein. Selbstverständlich können auch mehrere separate Lichtquellen vorgesehen sein. Bei der bzw. den Lichtquellen kann es sich um Leuchtdioden handeln. Denkbar ist die Verwendung weißer oder farbiger, z. B. grüner, blauer, roter Leuchtdioden. Selbstverständlich können auch andersfarbige Lichtquellen verwendet werden. Denkbar ist auch, dass z. B. unter Verwendung mehrerer Lichtquellen an einer Vielzahl von Stellen Licht in das Windschild eingekoppelt wird, mit dem Effekt, dass ein gesamter Windschildbereich oder eine Kante des Windschilds entlang ihrer gesamten Länge im Warnzustand leuchtet bzw. blinkt. Das Signal bzw. Warnsignal kann also ein Dauersignal oder ein alternierendes bzw. blinkendes Signal sein.

Die Lichtquelle kann in oder an einem Kombiinstrument des Motorrads angeordnet sein und das Windschild kann so angeordnet sein, dass es unmittelbar an die Lichtquelle heranreicht, so dass Licht unmittelbar von der Lichtquelle in das Windschild eingekoppelt wird. Alternativ dazu kann vorgesehen sein, dass die Lichtquelle zwar im Kombiinstrument des Motorrads angeordnet ist, das Licht aber nicht unmittelbar, sondern über eine separate Lichtleitung von der Lichtquelle übertragen und in das Windschild eingekoppelt wird.

Alternativ dazu kann die Lichtquelle auch in oder an einem Frontscheinwerfer des Motorrads angeordnet sein. Das Windschild kann unmittelbar an die Lichtquelle herangeführt sein, so dass das Licht unmittelbar von der Lichtquelle in das Windschild eingekoppelt wird. Alternativ dazu ist auch hier denkbar, dass die Lichtquelle zwar in oder an einem Frontscheinwerfer des Motorrads angeordnet ist, das Licht aber nicht unmittelbar in das Windschild eingekoppelt wird, sondern über eine separate Lichtleitung, über die das Windschild und die Lichtquelle optisch in Verbindung miteinander stehen.

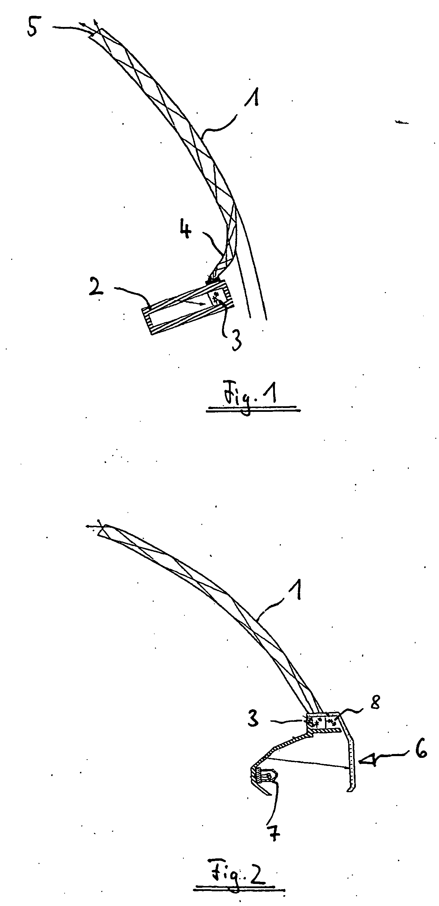

Figur 1 zeigt ein erstes Ausführungsbeispiel mit einem Windschild 1 und einem Kombiinstrument 2 und einer in das Kombiinstrument 2 integrierten Leuchtdiode 3. Die Leuchtdiode 3 wird von einer hier nicht näher dargestellten Elektronik angesteuert, welche die Motordrehzahl überwacht. Bei Überschreiten einer vorgegebenen kritischen Drehzahl steuert die Elektronik die Leuchtdiode 3 an. Diese beginnt dann zu leuchten bzw. blinkt. Das von der Leuchtdiode 3 erzeugte Lichtsignal wird über eine Lichtleitung 4 in das Windschild 1 eingesteuert. Im Windschild 1 werden die Lichtstrahlen reflektiert (Totalreflexion) und pflanzen sich bis zu einer oberen Kante 5 des Windschilds1 fort. Insbesondere die obere Kante 5 leuchtet dann also.

Figur 2 zeigt eine Variante der Erfindung, bei der die Leuchtdiode 3 in einen Frontscheinwerfer 6 des Motorrads integriert ist. Der Frontscheinwerfer 6 weist ein Abblendlicht 7 sowie ein im oberen Bereich des Frontscheinwerfers angeordnetes Standlicht 8 auf. Die Leuchtdiode 3 ist bei dem hier gezeigten Ausführungsbeispiel unmittelbar hinterhalb des Standlichts 8 angeordnet.

Im Unterschied zum Ausführungsbeispiel der Figur 1 wird hier das von der Leuchtdiode 3 erzeugte Licht unmittelbar in das Windschild 1 eingesteuert. Das Windschild 1 reicht also unmittelbar bis an die Leuchtdiode 3 heran.

## Patentansprüche

1. Motorrad, mit einer Elektronik, welche mindestens einen Zustandsparameter überwacht und bei Vorliegen eines vordefinierten Zustandsparameters ein Signal erzeugt, wobei das Signal eine Anzeigeeinrichtung (1, 3) ansteuert,
**dadurch gekennzeichnet, dass** zumindest ein Teil der Anzeigeeinrichtung durch das Windschild (1) gebildet ist.

2. Motorrad nach Anspruch 1, **dadurch gekennzeichnet, dass** die Elektronik die Drehzahl eines Motors des Motorrads überwacht und bei Erreichen einer kritischen Drehzahl ein Warnsignal erzeugt, wobei das Warnsignal eine als Warneinrichtung (1, 3) fungierende Anzeigeeinrichtung ansteuert, die dazu auffordern soll, die Drehzahl des Motors zu reduzieren, wobei zumindest ein Teil der Warneinrichtung (1, 3) in ein Windschild (1) des Motorrads integriert oder durch das Windschild (1) gebildet ist.

3. Motorrad, nach Anspruch 1 oder 2, **dadurch gekennzeichnet, dass** ein Teil (1, 4) der Warneinrichtung (1, 3, 4) durch einen Lichtleiter (1, 4) gebildet ist, wobei das Warnsignal ein in den Lichtleiter (1, 4) eingekoppeltes Lichtsignal ist.

4. Motorrad, nach einem der Ansprüche 1 bis 3, **dadurch gekennzeichnet, dass** das Windschild (1) aus einem transparenten, lichtleitenden Material besteht und als Lichtleiter fungiert.

5. Motorrad, nach einem der Ansprüche 1 bis 4, **dadurch gekennzeichnet, dass** die Warneinrichtung (1, 3, 4) eine von der Elektronik angesteuerte Lichtquelle (3) aufweist, die Licht in den Lichtleiter (1, 4) einkoppelt.

6. Motorrad, nach einem der Ansprüche 1 bis 5, **dadurch gekennzeichnet, dass** die Lichtquelle (3) eine Leuchtdiode ist.

7. Motorrad, nach einem der Ansprüche 1 bis 6, **dadurch gekennzeichnet, dass** die Lichtquelle (3) in oder an einem Kombiinstrument (2) des Motorrads angeordnet ist und das Windschild (1) unmittelbar an die Lichtquelle (3) heranreicht, wobei das Licht unmittelbar von der Lichtquelle (3) in das Windschild (1) eingekoppeltwird.

8. Motorrad, nach einem der Ansprüche 1 bis 7, **dadurch gekennzeichnet, dass** die Lichtquelle (3) in oder an einem Kombiinstrument (2) des Motorrads angeordnet ist und Licht von der Lichtquelle (3) über eine separate Leitung (4) in das das Windschild (1) eingekoppelt wird.

9. Motorrad, nach einem der Ansprüche 1 bis 6, **dadurch gekennzeichnet, dass** die Lichtquelle (3) in oder an einem Frontscheinwerfer (6) des Motorrads angeordnet ist und das Windschild (1) unmittelbar an die Lichtquelle (3) heranreicht.

10. Motorrad, nach einem der Ansprüche 1 bis 6, **dadurch gekennzeichnet, dass** die Lichtquelle (3) in oder an einem Frontscheinwerfer (6) des Motorrads angeordnet ist und Licht von einer Lichtquelle über eine separate Leitung in das das Windschild (1) eingekoppelt wird.

## Claims

1. A motorcycle, with an electronic system, which monitors at least one state parameter and generates a signal when a predefined state parameter is present, the signal activating a display device (1, 3),
**characterised in that** at least one part of the display device is formed by the windscreen (1).

2. A motorcycle according to claim 1, **characterised in that** the electronic system monitors the speed of an engine of the motorcycle and generates a warning signal on reaching a critical speed, the warning signal activating a display device acting as a warning device (1, 3), which is to request that the speed of the engine be reduced, wherein at least one part of the warning device (1, 3) is integrated in a windscreen (1) of the motorcycle or is formed by the windscreen (1).

3. A motorcycle according to claim 1 or claim 2, **characterised in that** a part (1, 4) of the warning device (1, 3, 4) is formed by a light guide (1, 4), the warning signal being a light signal coupled into the light guide (1, 4).

4. A motorcycle according to any one of claims 1 to 3, **characterised in that** the windscreen (1) comprises a transparent, light-guiding material and acts as a light guide.

5. A motorcycle according to any one of claims 1 to 4, **characterised in that** the warning device (1, 3, 4) has a light source (3), which is activated by the electronic system and couples light into the light guide (1, 4).

6. A motorcycle according to any one of claims 1 to 5, **characterised in that** the light source (3) is a light-emitting diode.

7. A motorcycle according to any one of claims 1 to 6, **characterised in that** the light source (3) is arranged in or on an instrument cluster (2) of the motorcycle and the windscreen (1) reaches directly to the light source (3), wherein the light being coupled directly from the light source (3) into the windscreen (1).

8. A motorcycle according to any one of claims 1 to 7, **characterised in that** the light source (3) is arranged in or on an instrument cluster (2) of the motorcycle and light is coupled from the light source (3) via a separate line (4) into the windscreen (1).

9. A motorcycle according to any one of claims 1 to 6, **characterised in that** the light source (3) is arranged in or on a headlight (6) of the motorcycle and the windscreen (1) reaches directly to the light source (3).

10. A motorcycle according to any one of claims 1 to 6, **characterised in that** the light source (3) is arranged in or on a headlight (6) of the motorcycle and light is coupled from a light source via a separate line into the windscreen (1).

## Revendications

1. Moto équipée d'une électronique surveillant au moins un paramètre d'état et qui, génère un signal pour un paramètre d'état prédéfini,
* le signal commandant une installation d'affichage (1, 3),
moto **caractérisée en ce qu'**
au moins une partie de l'installation d'affichage est constituée par le pare-brise (1).

2. Moto selon la revendication 1,
**caractérisée en ce que**
l'électronique surveille le régime du moteur de la moto et génère un signal d'avertissement lorsqu'on atteint un régime critique,
* le signal d'avertissement commandant une installation d'affichage fonctionnant comme installation d'avertissement (1, 3), qui doit demander à réduire le régime du moteur,
* au moins une partie de l'installation d'avertissement (1, 3) est intégrée dans le pare-brise (1) de la moto ou est formée par le pare-brise (1).

3. Moto selon la revendication 1 ou 2,
**caractérisée en ce qu'**
une partie (1, 4) de l'installation d'avertissement (1, 3, 4) est formée par un guide de lumière (1, 4),
* le signal d'avertissement étant un signal lumineux injecté dans le guide de lumière (1, 4).

4. Moto selon l'une des revendications 1 à 3,
**caractérisée en ce que**
le pare-brise (1) est réalisé en un matériau transparent guidant la lumière et fonctionnant comme guide de lumière.

5. Moto selon l'une des revendications 1 à 4,
**caractérisée en ce que**
l'installation d'avertissement (1, 3, 4) comporte une source de lumière (3) commandée par l'électronique et qui injecte la lumière dans les guides de lumière (1, 4).

6. Moto selon l'une des revendications 1 à 5,
**caractérisée en ce que**
la source de lumière (3) est une photodiode.

7. Moto selon l'une des revendications 1 à 6,
**caractérisée en ce que**
la source de lumière (3) est installée dans ou sur un instrument combiné (2) de la moto et le pare-brise (1) arrive directement sur la source de lumière (3),
* la lumière étant injectée directement par la source de lumière (3) dans le pare-brise (1).

8. Moto selon l'une des revendications 1 à 7,
**caractérisée en ce que**
la source de lumière (3) est prévue dans ou sur un instrument combiné (2) de la moto et la lumière de la source (3) est injectée dans le pare-brise (1) par une ligne séparée (4).

9. Moto selon l'une des revendications 1 à 6,
**caractérisée en ce que**
la source de lumière (3) est installée dans ou sur le projecteur frontal (6) de la moto et le pare-brise (1) arrive directement sur la source de lumière (3).

10. Moto selon l'une des revendications 1 à 6,
**caractérisée en ce que**
la source de lumière (3) est installée dans ou sur un projecteur frontal (6) de la moto et la lumière d'une source de lumière est injectée par une ligne séparée dans le pare-brise (1).
